# EUROPEAN PATENT APPLICATION

(11) **EP 1 107 423 A1**
(43) Date of publication of application: **13.06.2001**
(21) Application number: 99309616.3
(22) Date of filing: 30.11.1999
(51) Int. Cl.: H02K 1/14

(54) **Stator for use in an electromotor or dynamo**

(71) Applicant: Fan, Yang-Fung, Tao-Yuan (TW)
(72) Inventor: Fan, Yang-Fung, Tao-Yuan (TW)
(74) Representative: Stonehouse, Sidney William

(57) **Abstract**

A stator (90) for use in an electro-motor or dynamo, which includes a plurality of stator units (10) and winding means (30) wound round the stator units. Each stator unit (10) comprises a column (19) having a first end section (11), a second end section (12) and a middle section (13), the first end section (11) and the second end section (12) being formed integral with two distal ends of the middle section (13) and turned toward an inner side (14) of the column. The stator units are arranged around a central axis in such a manner that the longitudinal axis of each stator (90) is arranged in parallel or perpendicular to the central axis or at an angle relative to the central axis.

## Description

### BACKGROUND OF THE INVENTION

The present invention relates to a stator, and more particularly to an improved structure of stator for use in a electro-motor or dynamo.

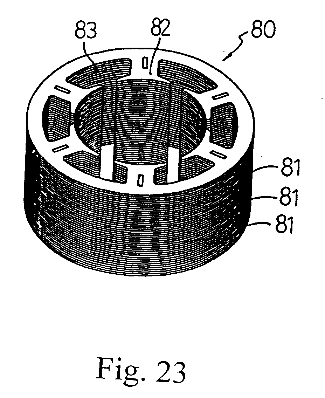

Figure 23 shows a stator for use in a **electro-motor** or dynamo. This structure of stator **80** is comprised of a metal core consisting of a stack of metal plates **81** of thickness about within 0.35mm∼0.5mm. Each metal plate **81** comprises a plurality of teeth **82** and a plurality of inside notches **83** alternatively arranged on the inside around the circular center opening thereof. This structure of stator **80** wastes lots of metal plate material (the portions at the inside notches **83** and center portion **84**), and requires special machines, such as winding machine, shaping machine, and binding machine, etc. for winding the windings on the metal plates **81**. When increasing the number of poles (N poles and S poles), the wire winding procedure becomes complicated, and the number of turns of the windings is accordingly reduced.

### SUMMARY OF THE INVENTION

It is one object of the present invention to provide a stator, which can be alternatively arranged to fit different design requirements. It is another object of the present invention to provide a stator, which is easy and costless to manufacture. It is still another object of the present invention to provide a stator, which has independent stator units for easy installation of the windings separately, enabling the windings to be wound round each stator unit in a saturated manner, so as to improve the strength of magnetic field. It is still another object of the present invention to provide a stator, which has multiple stator units arranged at different layers, so that the number of poles (N poles and S poles) can easily be increased without reducing the number of turns of the windings by arranging the stator units in such a manner that a difference of elevation exists in the direction of the longitudinal axis between the stators at each two adjacent layers.

According to the present invention, the stator is comprised of a plurality of stator units. Each stator unit is comprised of a column and winding means wound round the column. The column comprises a first end section, a second end section, and a middle section. The first end section and the second end section are formed integral with two distal ends of the middle section, and turned toward an inner side of the column. The stator units are arranged around a central axis on which the rotor is rotated. The stator units are independent members. The windings are respectively wound round the column of each stator unit. According to different alternate forms of the present invention, the longitudinal axis of each stator can be arranged in parallel or perpendicular to the central axis, or at an angle relative to the central axis. The stator units can be arranged on a plane around the central axis. Alternatively, the stator units can be arranged at different layers and spaced along the central axis, such that a difference of elevation exists between the stators at each two adjacent layers.

### BRIEF DESCRIPTION OF THE DRAWINGS

Figure 1 shows a column for a stator according to the present invention.

Figure 1A - 1D show the side views for different shapes of column.

Figure 2 shows an alternate form of the column for stator according to the present invention.

Figure 3 shows another alternate form of the column for stator according to the present invention.

Figure 4 is a sectional view of a stator according to a first embodiment of the present invention.

Figure 5 is a sectional view of a stator according to a second embodiment of the present invention.

Figure 6 is a sectional view of a stator according to a third embodiment of the present invention.

Figure 7 is a sectional view of a stator according to a fourth embodiment of the present invention.

Figure 8 is a perspective view of the stator according to the fourth embodiment of the present invention.

Figure 9 is a sectional view of a stator according to a fifth embodiment of the present invention.

Figure 10 is a perspective view of the stator according to the fifth embodiment of the present invention.

Figure 11 is a perspective view of a stator according to a sixth embodiment of the present invention.

Figure 12 is a sectional view of the stator according to the sixth embodiment of the present invention.

Figure 13 is a sectional view of a stator according to a seventh embodiment of the present invention.

Figure 14 is a sectional view of a stator according to an eighth embodiment of the present invention.

Figure 15 is a perspective view of the stator according to the eighth embodiment of the present invention.

Figures 16 through 18 show three different forms of rotors according to the present invention.

Figure 19 illustrates a stator according to a ninth embodiment of the present invention.

Figure 20 and 21 show two other different forms of rotors according to the present invention, and Figure 20A and 21A are the top view hereof.

Figure 23 is a perspective view of a stator according to the prior art.

### DETAILED DESCRIPTION OF THE PREFERRED EMBODIMENT

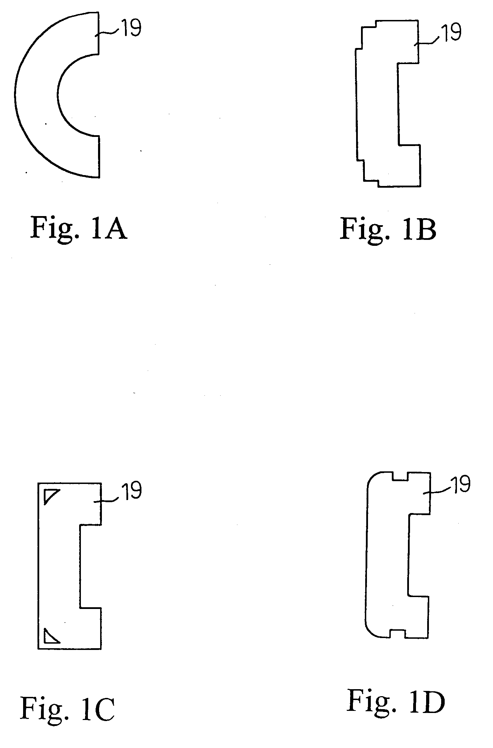

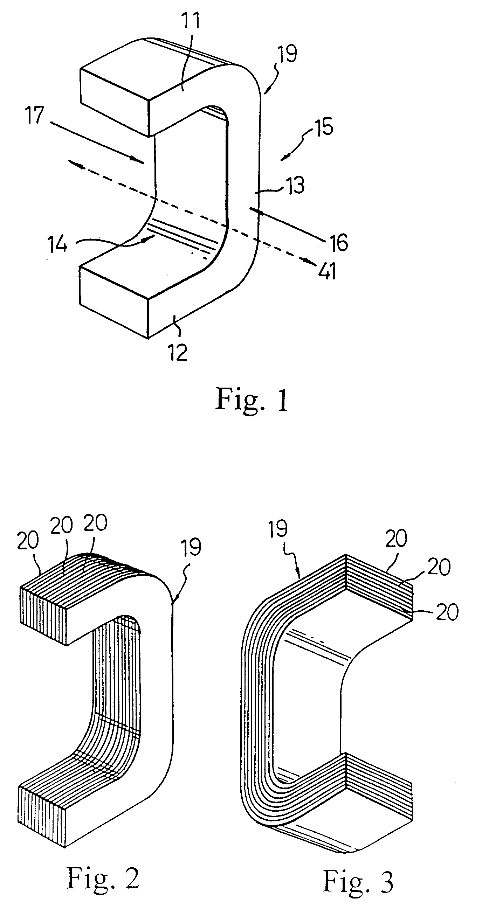

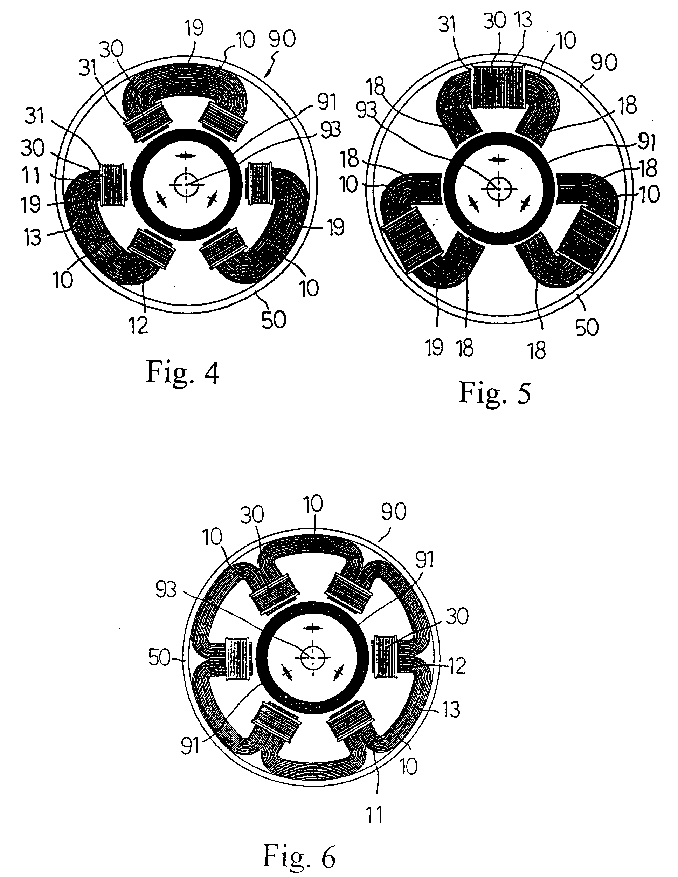

Referring to Figure 4, a stator **90** is shown comprised of three stator units **10**. Each stator unit **10** is comprised of a column **19**, and a winding **30**. The column **19**, as shown in Figure 1, extends longitudinally along a longitudinal axis **41** from a topside **16** toward a bottom side **17**, comprising a first end section **11**, a second end section **12**, and a middle section **13**. The first end section **11** and the second end section **12** are respectively formed integral with two distal ends of the middle section **13**, and turned toward the inner side **14** of the column **19** (after installation of the winding and connection of electric current to the winding, the first end section **11** and the second end section **12** form the N pole and the S pole respectively). The side opposite to the inner side **14** is the outer side **15**. The column **19** is made of magnetically conductive material, for example, powder metal material, or a plurality of magnetically conductive plates **20** arranged in a stack in the direction of the longitudinal axis **41** or from the inner side **14** toward the outer side **15.** The magnetically conductive plates **20** can be obtained from steel plates. The winding **30** is made of enameled wire wound round the column **19** through multiple turns over the top side **16**, the inner side **14**, the bottom side **17**, and the outer side **15**. Winding holder means **31** is preferably provided at the column **19** to hold the winding **30**.

In Figure 4, the winding **30** of each stator unit **10** is provided at the first end section **11** and the second end section **12**, and the stator units **10** are equiangularly spaced around the rotor **91** with the inner side **14** of each stator unit **10** facing the central axis **93** on which the rotor **91** is rotated. This arrangement forms a 6-pole (three N poles and three S poles) stator **90**.

Figure 5 shows an alternate form of the present invention. According to this alternate form, the winding **30** of each stator unit **10** is provided at the middle section **13**, and the first end section **11** and second end section **12** of each stator unit **10** each have an end edge **18** smoothed curved inwards for close contact with the rotor **91**.

Figure 6 shows another alternate form of the present invention. According to this alternate form, the stator **90** is comprised of six stator units **10**, and the windings **30** are respectively fastened to the first end section **11** at the column **19** of one stator unit **10** and the second end section **12** of the column **19** of another stator unit **10**.

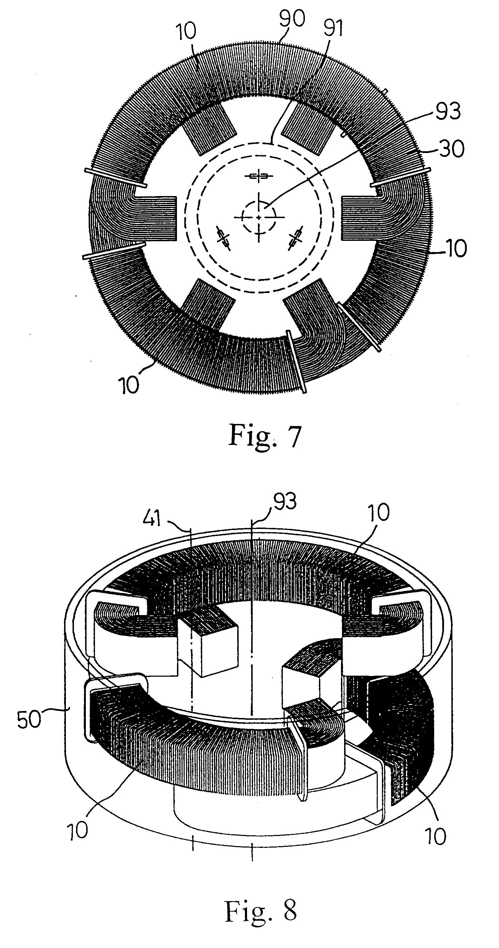

Figures 7 and 8 show still another alternate form of the present invention. According to this alternate form, the stator **90** is a 6-pole stator having three stator units **10** arranged into three layers spaced in the direction of the central axis **93**, and there is a difference of elevation in the direction of the longitudinal axis **41** between each two adjacent stator units **10** (the stator unit **10** at each layer is provided at a different location relative to the longitudinal axis **41**).

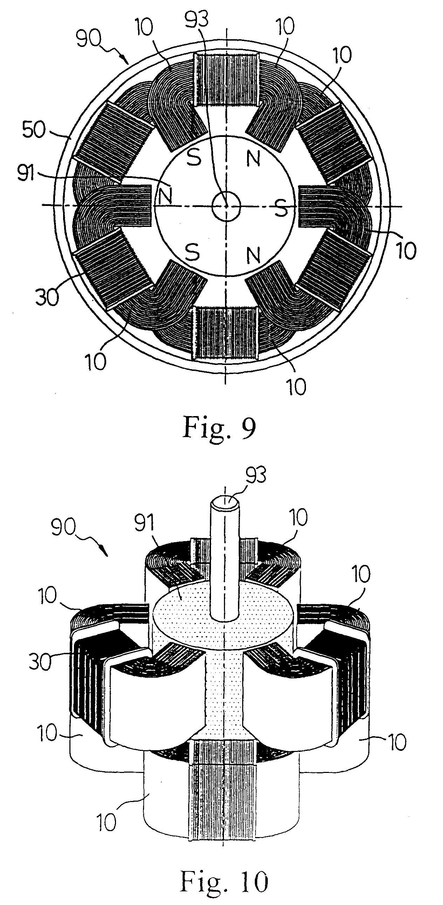

Figures 9 and 10 show still another alternate form of the present invention. According to this alternate form, the stator **90** is a 12-pole stator comprised of six stator units **10** arranged in two sets. The two sets of stator units **10** are spaced in the direction of the central axis **93**, and staggered.

In the embodiments shown in Figures from 4 through 10, the longitudinal axis **41** is parallel to the central axis **93**.

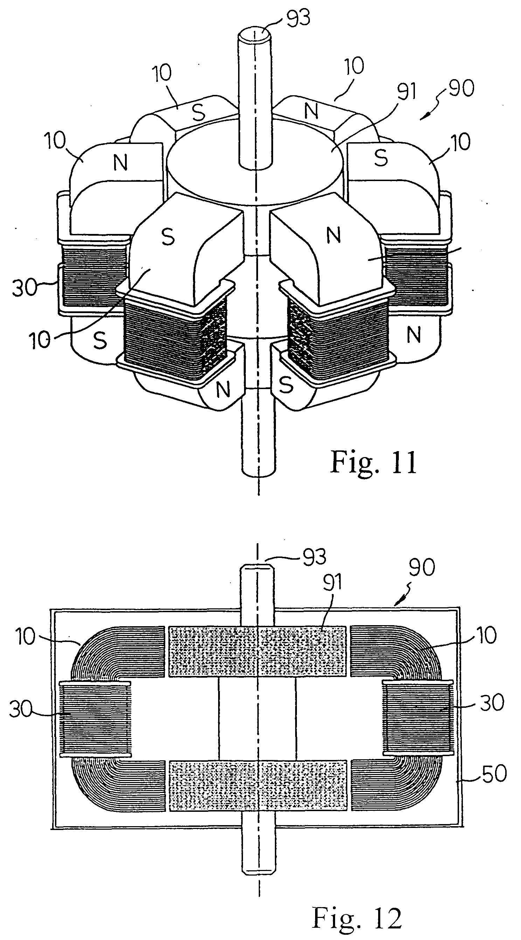

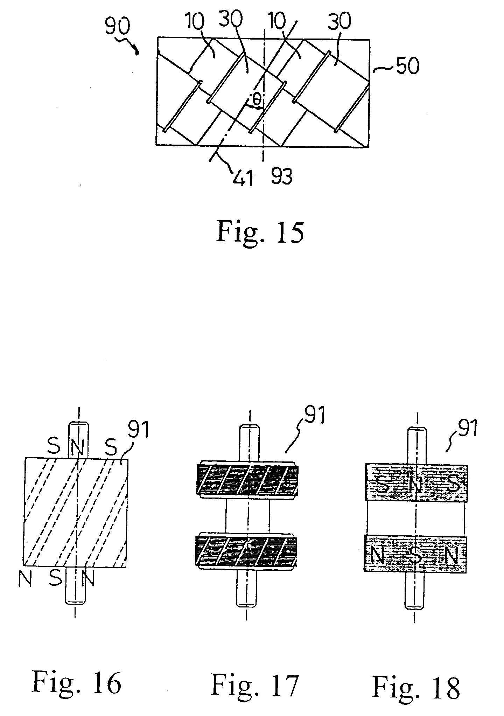

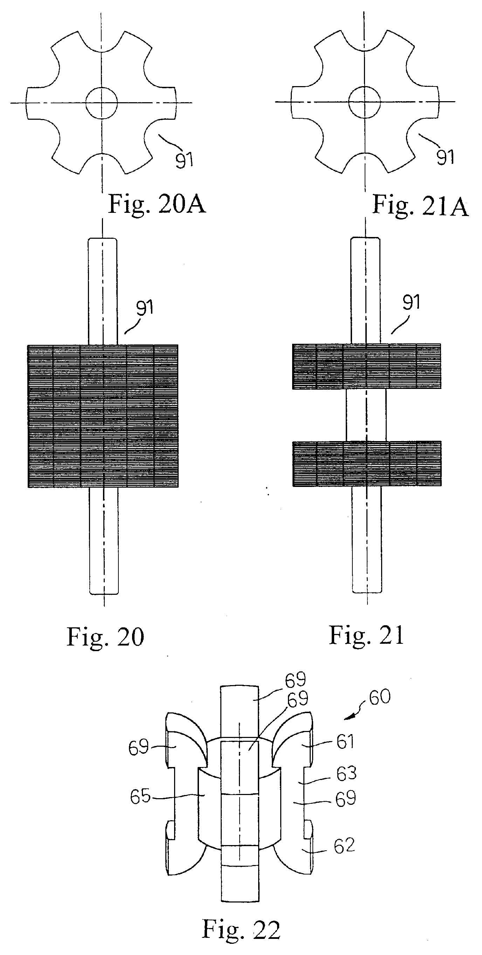

Figures from 11 through 13 show still other alternate forms of the present invention, in which the longitudinal axis **41** of each stator unit **10** respectively extends perpendicular to the central axis **93**. According to inventor's experiment, the efficiency of stator unit **10** shown in Figures from 11 through 13 is better than the efficiency of stator unit **10** shown in Figures from 4 through 10. In Figures 11 and 12, the stator **90** is a 12-pole stator comprised of six stator units **10** spaced from one another at 60° around the central axis **93**. In this case, the rotor 91 can be used like Figure 16, 17, 18, 20, and 21. In Figure 16, the S poles and N poles of the rotor 91 are respectively extended in an oblique direction, and alternatively arranged in parallel. In Figure 17, the rotor 91 is comprised of two vertically spaced aluminum cast stator elements (non-permanent magnets). In Figure 18, the rotor 91 is comprised of two magnets vertically spaced in reversed directions. Figure 20 and 21 also show a different shape of rotors 91, especially with different shape of top view shown in Figure 20A and 21A.

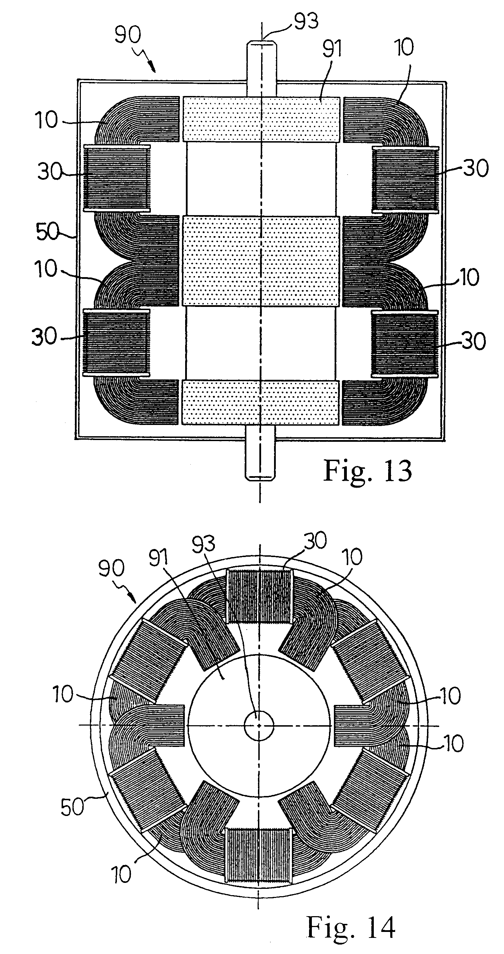

The embodiment shown in Figure 13 is a two-layer design based on the embodiment shown in Figures 11 and 12, in which the stator elements **10** at the bottom layer and the stator elements **10** at the top layer are staggered (in Figure 13, only the bottom layer stator elements **10** are shown).

According to the alternate forms shown in Figures 14 and 15, the longitudinal axis **41** of each stator unit **10** defines with the central axis **93** a contained angle Θ. This arrangement enables a relatively thicker winding **30** to be respectively wound round the column**19** of each stator unit **10**.

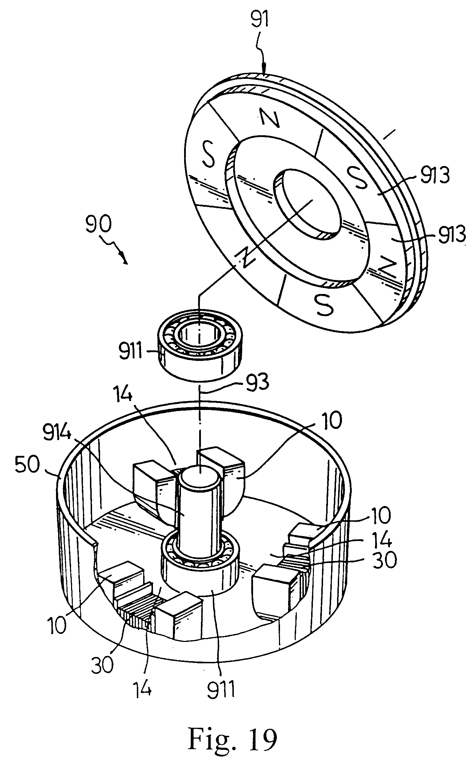

Figure 19 shows still another alternate form of the present invention, in which the stator **90** is a 6-pole stator comprised of three stator units **10** arranged in such a direction that the inner side **14** of each stator unit **10** is disposed in parallel to the longitudinal axis **41** of the respective stator unit **10**, and the longitudinal axis **41** of each of the three stator units **10** respectively extends perpendicular to the central axis **93**. In this case, the rotor **91** is shaped like a disk, and supported on a shaft **914** in locating means **50** by bearings **911**. The rotor **91** comprises a plurality of magnets **913** (6 poles) arranged around the border. This arrangement enables the rotor **91** to be rotated on the shaft **914**.

The aforesaid locating means **50** can be a shell, and the stator units **10** of the stator **90** are respectively fastened to the shell **50** on the inside by an adhesive, screw means, or a welding apparatus. Alternatively, the stator units **10** can be arranged on a rack, and then a plastic shell is molded on the stator units **10** and the rack.

Figure 22 show a rotor 60 which comprises several rotor units **69** mounted on a rotor base 65, wherein the material of rotor units **69** are magnetic. Each rotor unit **69** is similar to the column **19** of stator illustrated as above, which comprises a first end section **61**, a second end section **62**, and a middle section **63**, wherein the inner side of each rotor unit **69** being arranged toward outside. With regard to other definition of rotor unit **69**, such as top side, inner side and etc, please refer to the description of column **19**. The rotor 60 can be used with the stator units **10** such as shown in Figures from 11 through 13

It is to be understood that the drawings are designed for purposes of illustration only, and are not intended as a definition of the limits and scope of the invention disclosed. For example, Figure 1A - 1D show the side views for different shapes of column.

## Claims

1. A stator (90) for use in an electro-motor or dynamo, characterised in that it comprises:
(i) a plurality of stator units (10) arranged around a central axis, said stator units each comprising:
(a) a column (19), said column comprising a top side (16), a bottom side (17) opposite to said top side, an inner side (14), an outer side (15) opposite to said inner side, a first end section (11), a second end section (12) and a middle section (13) connected between said first end section (11) and said second end section (12), said column (19) being extended longitudinally along a longitudinal axis from said top side (16) toward said bottom side (17), said first end section and said second end section respectively formed integral with two distal ends of said middle section (13) and turned toward said inner side (14); and
(b) electrically conductive winding means (30) wound round said column (19) through multiple turns over said top side (16), said inner side (14), said bottom side (17) and said outer side (15);
and
(ii) locating means (50) for holding said stator units (10) fixedly together.

2. A stator according to claim 1 characterised in that the inner side (14) of each of said stator units (10) is respectively disposed facing said central axis.

3. A stator according to claim 1 or claim 2 characterised in that the longitudinal axis of each of said stator units (10) is respectively arranged in parallel to said central axis.

4. A stator according to any preceding claim characterised in that said stator units (10) are arranged into multiple layers spaced along said central axis.

5. A stator according to claim 4 characterised in that the number of stator units (10) at each of said layers is equal.

6. A stator according to claim 4 or claim 5 characterised in that the stator units (10) in said layers are spaced in the direction of said central axis, and there is a difference of elevation in the direction of the longitudinal axis between the stator units at each two adjacent layers.

7. A stator according to claim 2 characterised in that the longitudinal axis of each of said stator units (10) is respectively disposed perpendicular to said central axis.

8. A stator according to claim 7 characterised in that said stator units (10) are arranged into multiple layers spaced along said central axis.

9. A stator according to claim 7 characterised in that said stator is comprised of six stator units (10) equally spaced from one another at 60° angle around said central axis.

10. A stator according to claim 2 characterised in that the longitudinal axis of each of said stator units (10) passes through said central axis at an angle.

11. A stator according to claim 1 characterised in that the longitudinal axis of each of said stator units (10) is respectively disposed perpendicular to said central axis, and the inner side (14) of the column (19) of each of said stator units is respectively disposed in parallel to the longitudinal axis of the respective stator unit.

12. A rotor (60) for use in an electro-motor or dynamo, characterised in that it comprises:
(i) a plurality of rotor units (69) made of magnetic material arranged around a central axis, said rotor units (69) each comprising a column having a top side, a bottom side opposite to said top side, an inner side, an outer side opposite to said inner side, a first end section (61), a second end section (62), and a middle section (63) connected between said first end section (61) and said second end section (62), said column being extended longitudinally along a longitudinal axis from said top side toward said bottom side, said first end section (61) and said second end section (62) respectively formed integral with two distal ends of said middle section (63) and turned toward said inner side; and
(ii) locating means (65) for holding said rotor units (69) fixedly together, the inner side of each rotor unit being arranged towards the outside of the rotor.
